Europäisches Patentamt

European Patent Office

Office européen des brevets

(11) Publication number: **0 303 576**
**B1**

# EUROPEAN PATENT SPECIFICATION

(45) Date of publication of patent specification: **09.01.91**

(21) Application number: **88830299.9**

(22) Date of filing: **12.07.88**

(51) Int. Cl.⁵: **B 29 C 51/00,** B 29 C 53/54 //
B29L31:60

(54) Method of and apparatus for thermoforming semifinished products extruded in form of continuous, alveolate sheets or panels, in particular of polypropylene.

(30) Priority: **21.07.87 IT 4573587**

(43) Date of publication of application:
**15.02.89 Bulletin 89/07**

(45) Publication of the grant of the patent:
**09.01.91 Bulletin 91/02**

(84) Designated Contracting States:
**AT BE CH DE ES FR GB GR IT LI LU NL SE**

(56) References cited:
**EP-A-0 083 030**
**EP-A-0 158 951**
**DE-A-3 318 937**
**FR-A-1 601 548**

(73) Proprietor: **Karton S.p.A.**
**Via S. Michele, no. 15**
**I-33070 Caneva (Pordenone) (IT)**

(72) Inventor: **Bressan, Matteo**
**Via Mameli 6**
**Sacile (PN) (IT)**

(74) Representative: **Fiammenghi-Domenighetti,**
**Delfina et al**
**Fiammenghi-Fiammenghi Via Quattro Fontane**
**31**
**I-00184 Roma (IT)**

Courier Press, Leamington Spa, England.

## Description

This invention relates to a method and apparatus for thermoforming semifinished plastic products extruded in the form of a continuous, alveolate strip, for producing at least two pluralities of alveolate panels, in particular of polypropylene, wherein each continuous strip comprises two other parallel walls connected by a plurality of parallel webs perpendicular to said outer walls.

Under the term semifinished products of extruded, alveloate polypropylene are intended the products which are obtained from the homonymous plastomer and provided in the form of plates or panels having a partially hollow structure and formed by deforming said starting material at the elasto-plastic state and by shaping and settling the material after the stress generated by said deformation is disappeared.

At the present status of art, as well known, the extruded, alveolate sheets cut as requested have hollow inner cavities or channels communicating with the outside. Such a structural form has many drawbacks which negatively affect the withstand of said semifinished products, in particular due to the entrance and deposit therein of powders, generally suctioned by thermal convection between hollow inner cavities and peripheral parts as well as due to the growth of mildews caused by the inlet of spore-generating organisms. Another problem is due to the roughness of the sharp edges which make the semifinished products awkward.

According to the status of art the troubles due to the open cavities are avoided by closing such cavities by a heat treatment by means of several thermoforming rollers. Even if good results have been achieved in the industrial production, a lot of several disadvantages due to the necessity of peripheral "out-of-machining" forming, i.e. a processing separate from the main extrusion step have been noticed.

Moreover the deformation of the semifinished product as for the general flatness as well as the straightness of the edges have been detected. Furthermore the production rate is reduced and the matching of the forming rollers to the different thickness and type of material is hard; that causes with relevant loss of time in the starting phase and in the production of sheets.

Said negative effects causing an onerous industrial production are due to the operative discontinunity, the withstand to the movement, the uneven distribution of the heat necessary for correct peripheral forming and the time needed for the fitting of the above mentioned members according to the different forms.

EP—A—1 083 030 discloses a panel obtained from a continuous strip of a plastic transparent material, so called "Makrolon", i.e. a polycarbonate, panels to be used for greenhouses, indoor swimming pools, workshops and the like.

The extruded strip has two parallel outer walls and a plurality of parallel partition webs, transversally disposed so as to form inner hollow parallel channels open at their ends.

Said strip is then transversally separated into a plurality of panels by a method, including a heating of transversal portions of said strip to, at least, the temperature, at which the resin reaches its thermoplastic state, then causing the joining of the outer walls of the strip in said treated portions so as to form a gastight seal and a separation line between a panel and the preceding one.

Said joining step is carried out, on the alveolate strip, as it is stopped.

In this condition the predetermined portion of the strip is heated by radiation produced by lamps, which have to be fed with electric current of a reduced power so as to prevent any substantial over-heating effect on the portions of the panels, adjacent to the transversal edge to be heat-sealed and cut.

This latter operation is performed by heat-sealing and heat cutting jaws carried by pistons performing up and down strokes at predetermined time intervals.

Accordingly, it is an object of the invention to provide a method and an apparatus which overcome the above mentioned problems, wherein the forming step is carried out directly just after the step of extrusion of the continuous strip and before the step of the longitudinally cutting thereof.

The method according to the invention comprises the steps of:

introducing the continuous, extruded alveolate strip into a cutting station;

longitudinally cutting the continuous strip near and along the edges thereof and along at least one longitudinal line of the strip in order to obtain at least two continuous sheets;

deflecting the continuous sheets about parallel transversal axes perpendicular to the moving direction of the sheets, along paths differently slanted with respect to the original feeding plane direction of the sheets;

thermoforming each of the longitudinal edges of said continuous sheets, which are subjected, at first, to a thermal action to soften the cut side edges and afterwards to a shaping action to close said side edges together;

cooling said longitudinal side edges of the continuous sheets, so as to avoid their deformation due to thermal action;

deflecting again the continuous thermoformed sheets so as to bring them in a coplanar arrangement; and then

cross-cutting the continuous thermoformed now coplanar sheets, in predetermined lengths so as to obtain panels, of desired sizes.

This invention relates also to an apparatus for thermoforming semifinished plastic products extruded in the form of a continuous alveolate strip, for producing at least two pluralities of alveolate panels, said strip having two parallel outer walls and inner parallel webs perpendicular to said outer walls and defining a plurality of transversal inner channels, comprising:

means for cutting the semifinished alveolate continuous moving strip coming from the extrusion station, in at least two longitudinal continuous sheets along the longitudinal side edges for trimming the selvedge of the strip and along at least one longitudinal line, as for instance the longitudinal axis of the original strip;

means for deflecting the longitudinally cut sheets about parallel transversal axes, perpendicular to the moving direction of the sheets along paths differently slanted with respect to the orginal feeding direction of the strip;

thermoforming means for subjecting the longitudinal side edges of the outer walls of each continuous sheets to a thermal action so as to soften said edges and then to a progressive shaping action to sealingly close said edges together;

cooling means for cooling the thermoformed longitudinal edges of the sheets;

means for deflecting again the continuous thermoformed sheets so that they can take again a coplanar mutual arrangement.

cross-cutting means for cutting the sheets in predetermined length so as to obtain alveolate panels of any desired size.

The advantages of the method and the apparatus of this invention are evident, in particular considering the continuous thermoforming of the edges of the semifinished plastic sheets just after the extrusion process of the continuous alveolate plastic strip.

The method and the apparatus of this invention for the thermoforming of semifinished alveolate plastic strip, for obtaining panels, made in particular of extruded polypropylene, fully achieve the prefixed purpose with a high efficiency due to the correlation of the apparatus with the extrusion machine as well as to the treatment of the edges of the sheets without impairing the flatness thereof, the evenness of the thermal exchange between the areas involved, and the accuracy of the forming action.

The method and the apparatus for structural thermoforming of a semifinished alveolate strip, in particular of extruded polypropylene, according to this invention will be now described in detail with reference to preferred, non-limitative embodiments shown in the annexed drawings, wherein:

Figs 1A and 1B, as viewed together, represent a schematic view of a production line of a continuous, alveolate strip accorrding to the prior art;

Fig. 2 shows a side view of a first embodiment of the thermoforming assembly according to the present invention;

Fig. 3 shows a front view of the cutting assembly thereof, taken from line III—III of Figure 2;

Fig. 4 is a schematic plan view showing the thermoforming assemblies located at the sides of the peripheral longitudinal edges of the continuous, alveolate sheets.

Fig. 5 shows a partial enlarged schematic cross view of the continuous, alveolate plastic strip showing two cutting blades;

Fig. 6 shows the detail in enlarged scale of a cross section of a heat generating unit of the thermoforming assembly, taken from the line IV—IV of Figure 2;

Fig. 7 shows an enlarged cross section of the forming unit of the thermoforming assembly and taken from the line V—V of Figure 2;

Fig. 8 shows perspective partially sectioned view of a variant of the thermoforming unit;

Fig. 9 shows a detailed in enlarged scale of the Figure 2, i.e. a section along the line X—X of Fig. 10 of the platform supporting the strip;

Fig. 10 shows a partial cross section taken along the lines II—II of Figures 2 and 9 of the supporting platform;

Fig. 11 shows a perspective view of a variant of the means for the deflection of the continuous, alveolate moving sheets;

Fig. 12 shows a schematic longitudinal side view of the means for the deflection of the continuous, alveolate sheets and of the thermoforming assemblies associated therewith; and

Fig. 13 shows a perspective view of the station of Figure 12.

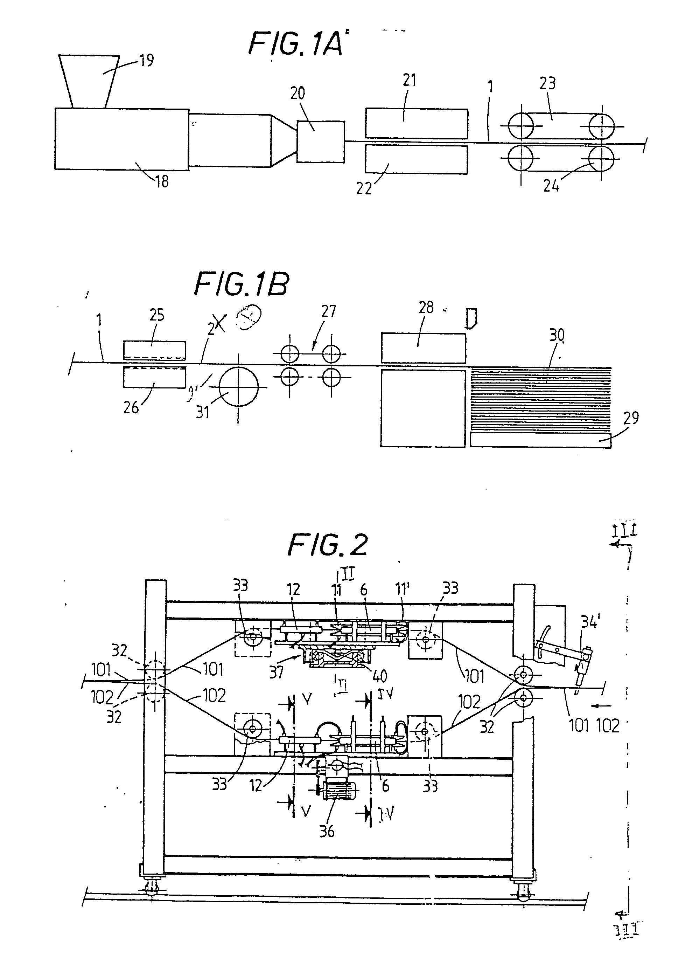

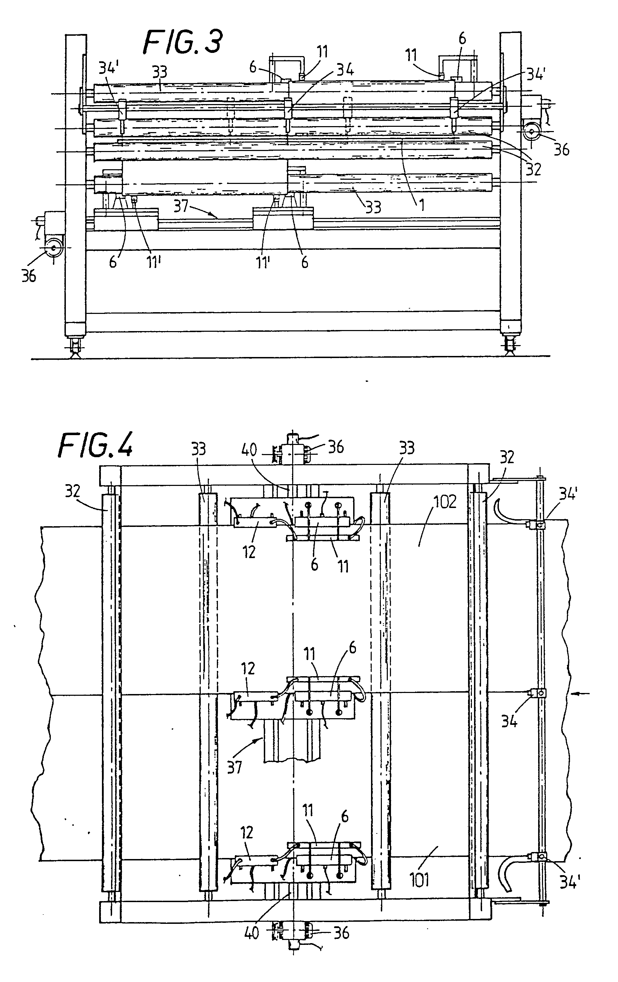

Figures 1 to 13 in reduced scale show the preferred embodiments of the apparatus carrying out the method for the structural thermoforming of semifinished products, in particular of extruded, alveolate polypropylene, and essentially comprising the units for the extrusion of the continuous, alveolate sheets, the cutting and the thermoforming thereof.

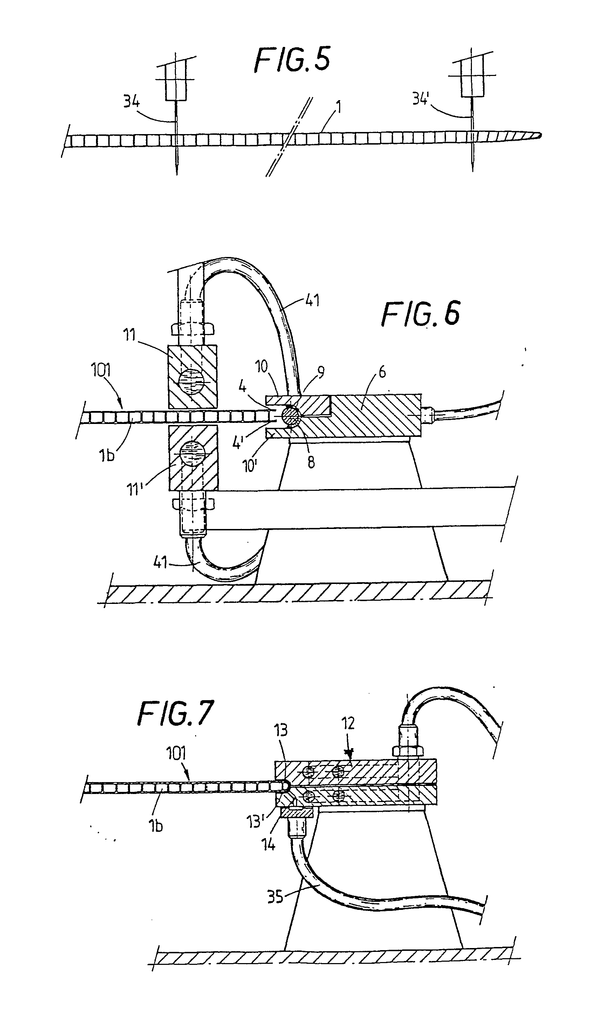

Figures 1A and 1B show a side view of the units of the production line for the continuous, alveolate sheets, in particular of extruded polypropylene, according to the prioar art and comprising a conventional press 18 fed at one end of the charging hopper 19 and provided at the other end with the forming maatrix 20 having an extrusion head able to produce the continuous, alveolate sheet 1 formed of longitudinal channels with horizontal and vertical walls as shown in Fig. 5.

The thickness of sheet 1 is successively stabilized by calibration units 21 and 22 in synergic action with the compressed air flows emitted by nozzles associated to matrix 20 and forming the alveolate structure, i.e. the cavities 1b of sheet 1 which is fed by opposed belt conveyors 23 and 24.

From belt conveyors 23 and 24 sheet 1 is guided between the opposed units 25 and 26 of an apparatus for the electroerosion of surfaces 2 and 2′ of sheet 1 which are thus prepared for the printing.

After the electroerosion units 25 and 26 sheet 1 is conveyed by belt conveyors 27 provided with blades for cutting the selvedge and then fed to the shearing machine 28 where it is crosswise cut and deposited on the board 29 to form the pile 30.

The device 31 between units 25, 26 and belt conveyors 27 is able to effect the flexographic printing of surface 2′ of sheet 1.

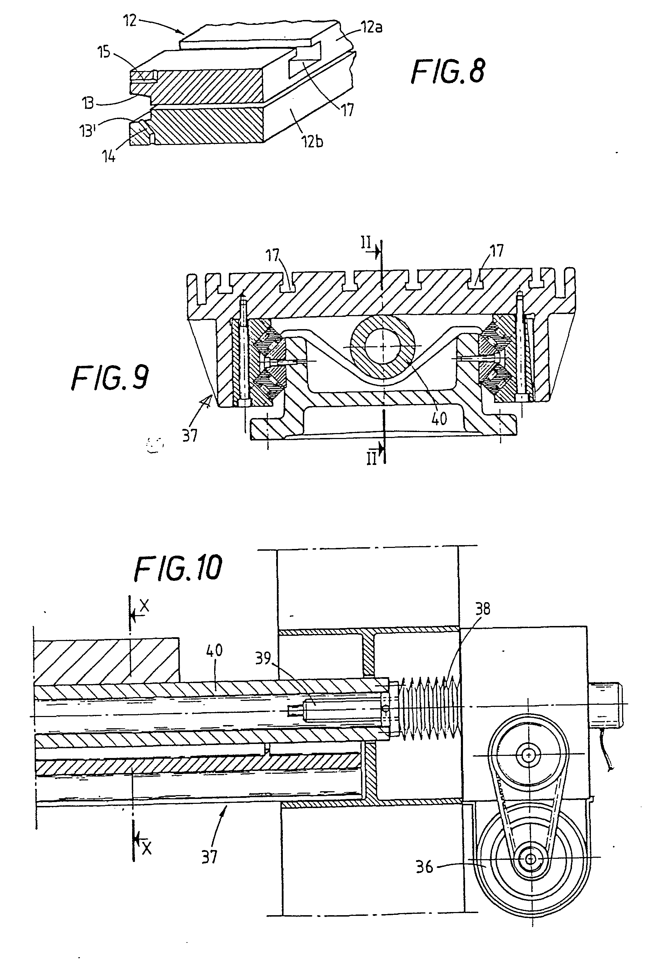

As mentioned before, in order to avoid that the alveolate cavities of sheet 1 communicate with the outside the so called "channels" should be closed by a thermoforming process acting on the side edges of the extruded sheet. In Figs. 2, 3 and 11 there is shown a cutting and thermoforming station for the side edges of alveolate sheet 1. Sheet 1 is cut by blades 34 and 34' at the entrance into the cutting and thermoforming station. Blade 34 longitudinally cuts sheet 1 along an axis thereof, and blades 34', as shown also in Fig. 5, cut and trim the edges of sheet 1, thus eliminating the selvedge which is deformed by thermal effect upon the extrusion, in order to provide two correctly aligned side edges which will be closed by the thermoforming assemblies. Sheet 1 is then passed about first deflecting rollers 32. The two halves 101, 102 of sheet 1 longitudinally cut by blade 34 are conveyed upwards and downwards, respectively, and passed about second deflecting rollers 33. Afterwards the cut edges of sheet 101, 102 are each subjected to a thermal action by assembly 6 which through electrical resistance 8 protected by insulator 9 produces heat which is irradiated through flanges 10 and 10' and softens edges 4 and 4' of sheet 1 guided between skids 11 and 11' in which cooling water fed through conduits 41 is circulated. Each sheet 101, 102 is then passed along forming an assembly 12, better shown in Fig. 7, which by means of its shaped sections 13 and 13' joins by contact softened edges 4 and 4', thus closing the side edge of each alveolate sheet 101, 102. The alternative embodiment of Fig. 8 shows assembly 12 provided with ducts 14 and 15 conveying cooling air from duct 35 towards sheets 101, or 102 so that the heating action of assembly 6 does not impair the evenness of sheet surfaces and the alveolate cavities adjacent to the outer edge to be treated. According to this embodiment assembly 12 is formed of two specular halves 12a and 12b, the distance of which can be adjusted in order to adapt forming assembly 12 to the different thickness of the semifinished product 1.

Fig. 4 shows the multiple arrangement of thermoforming assemblies 6 and 12 sidewise facing the edges of alveolate sheets 101, 102.

Thermoforming assemblies 6, 12 are mounted through guides 17 on a basement 37 fastened to a carriage driven by motor 36 effecting the fine adjustment of the gap between thermoforming assemblies 6, 12 and sheets 101, 102.

The fine adjustment serves to keep the gap between side edges 4, 4' cut by blade 34 and thermoforming assemblies 6, 12 essentially constant. To this end support basement 37 is driven by an alternative step motor 36 responsive to a signal which is generated by a sensor (not shown) of said gap.

Motor 36 draws near or move away assemblies 6, 12 from sheets 101, 102 so that the thermoforming action can be carried out under steady condition. The transmission of movement is effected by means of a bellow junction box 38 and an endless screw 39 engaging the threaded end of shaft 40 on which basement 37 supporting thermoforming assemblies 6, 12 is mounted (Fig. 10).

In Fig. 9 there is shown the section along line X—X of Fig. 10 in which basement 37 supporting thermoforming assemblies 6, 12 through guides 17 and shaft 40 driven by step motor 36 are illustrated.

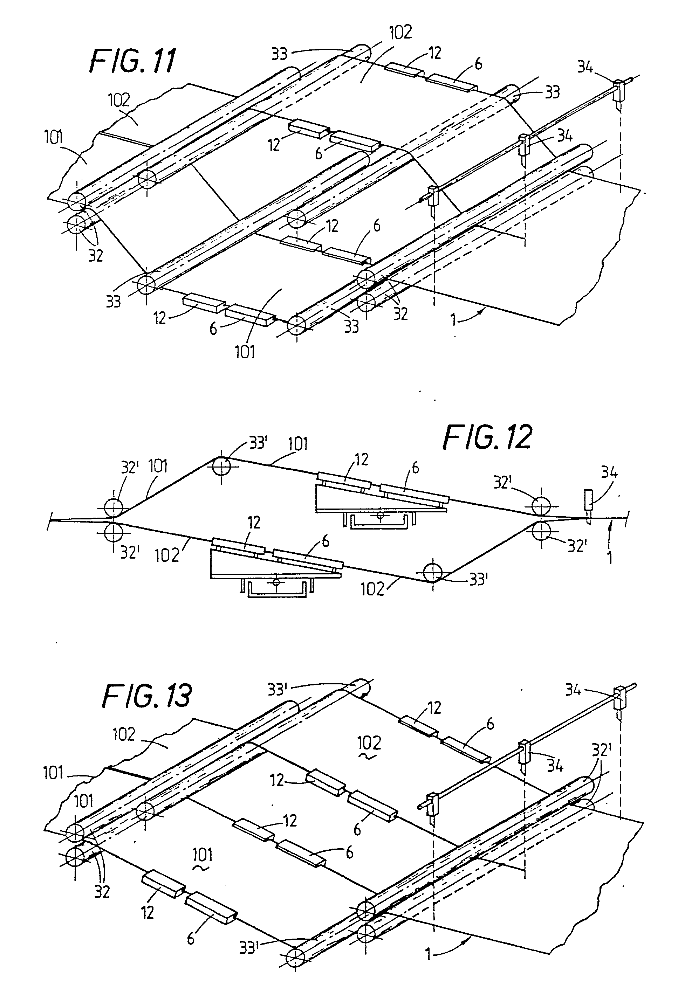

In Fig. 12 and 13 another embodiment of deflection station for alveolate sheets 101, 102 is shown. This arrangement allows a pair of deflection rollers to be eliminated by arranging thermoforming assemblies 6, 12 along an oblique path of sheet 1 which after being cut into sheets 101, 102, these latter are deflected by rollers 32' and conveyed at an angle upwards and downwards. Each of the sheets 101, 102 are subjected to thermoforming treatment along the oblique path as above described and then deflected again by rollers 33' and 32'.

The multiple thermoforming of alveolate sheets 101, 102 are thus achieved by the arrangement of several thermoforming assemblies able to close the alveolate structures of semifinished products at the edges of sheets 101, 102.

The present invention has been described on the base of a preferred embodiment thereof. It is obvious to the skilled in the art to modify such an embodiment without departing from the scope of this invention according to the appended claims.

**Claims**

1. Method for thermoforming semifinished plastic products extruded in the form of a continuous alveolate strip for producing at least two pluralities of alveolate panels, in particular, of polypropylene, wherein each continuous strip (1) comprises two outer parallel walls connected by a plurality of parallel webs, perpendicular to said outer walls, wherein said method comprises the steps of:

introducing the continuous, extruded alveolate strip (1) into a cutting station;

longitudinally cutting the continuous strip (1) near and along the edges thereof and along at least one longitudinal line of the strip (1), for instance the axis thereof; in order to obtain at least two continuous sheets (101, 102);

deflecting the continuous sheets (101, 102) about parallel transveral axes, perpendicular to the moving direction of the sheets along paths differently slanted with respect to the original feeding plane direction of the sheets (101, 102);

thermoforming each of the longitudinal edges of said continuous sheets (101, 102) which are subjected at first to the thermal action to soften the cut side edges and afterwards to a shaping action so as to close said side edges together;

cooling said longitudinal side edges of the continuous sheets (101, 102) so as to avoid their deformation due to thermal action;

deflecting again the continuous thermoformed sheets (101, 102) so as to bring them in coplanar arrangement;

cross-cutting the continuous thermoformed now coplanar sheets (101, 102) in predetermined lengths so as to obtain panels of desired sizes.

2. The method according to claim 1 characterized in that during the thermoforming step of the edges of the sheets (101, 102) the gap between the longitudinal side edges of each of the continuous sheets (101, 102) and the thermoforming means is kept essentially constant.

3. The method according to claims 1 and 2, characterized in that said gap between the longitudinal side edges of the continuous sheets and the thermoforming means is kept essentially constant by transversal movements of the thermoforming means with respect to each continuous sheet (101 or 102), said movement being controlled by a motor responsive to a gap variation signal generated by gap sensing means.

4. Apparatus for thermoforming semifinished plastic products extruded in the form of a continuous alveolate strip (1) for producing at least two pluralities of alveolate panels, in particular, made of polypropylene, said strip (1) having two outer parallel walls and inner parallel webs defining a plurality of transversal channels, the apparatus comprising:

means (34, 34') for cutting the semi-finished alveolate continuous moving strip (1) coming from the extrusion station in longitudinally continuous sheets (101, 102 . . . ) along the longitudinal side edges for trimming the selvedge of the strip (1), and along at least one longitudinal line, as for instance the longitudinal axis of the original strip (1);

means (32, 32', 33, 33') for deflecting the longitudinally cut sheets (101, 102) about parallel, transversal axes, perpendicular to the moving direction of the sheets (101, 102, . . . ) along paths differently slanted with respect to the original feeding direction of the strip (1);

thermoforming means (6, 12) for subjecting the longitudinal side edges of the outer walls of each continuous sheets (101, 102, . . . ) to a thermal action so as to soften said edges and then to a progressive shaping action to sealingly close said edges together;

means (35, 41) for cooling each of the longitudinal thermoformed sided edges of each sheet (101, 102); and

means (32, 32', 33, 33') for deflecting again the continuous sheets (101, 102) so that they take again a coplanar mutual arrangement.

5. The apparatus according to claim 4, characterized in that said deflecting means (32, 32', 33, 33') consists of deflection and guide rollers having spaced apart parallel axes, perpendicular to the feeding direction of the sheets (101, 102, . . . ), and about which the continuous sheets (101, 102), longitudinally cut from the continuous strip (1), are guided and deflected to directions, differently slanted with respect to the original feeding direction of the strip (1).

6. The apparatus according to claim 4, characterized in that each thermoforming means (6, 12) comprises a heating assembly (6) provided with an electrical resistance (8) and directed towards the longitudinal side edge of the respective continuous sheet (101, 102) and having heating flanges (10, 10') conveying heat and softening said edge as well as a forming assembly (12) formed of concave die for shaping by contact said softened edges of the outer walls of the sheets (101, 102) and sealingly closing them together.

7. The apparatus according to claim 4, characterized in that each cooling means comprises an air or other fluid source and a duct (35, 41) conveying said fluid on the longitudinal thermoformed edges of each continuous sheet (101, 102).

8. The apparatus according to claim 4, characterized in that it further comprises means for maintaining the gap between the thermoforming means (6, 12) and longitudinal side edge of the continuous sheets (101, 102) essentially constant, said means comprising gap sensing means able to feed a signal in response to variations of said gap; step motor (6) responsive to said signal to drive to or from the thermoforming assembly (6, 12) in a transversal direction with respect to the feeding direction of each continuous sheet (101, 102).

**Patentansprüche**

1. Verfahren zum Warmformen von Kunststoffhalbfertigprodukten, die zur Erzeugung von zumindest zwei Vielzahlen von mit Hohlkammern versehenen Platten, insbesonders aus Polypropylen, in Form eines endlosen, mit Hohlkammern versehenen Bandes extrudiert werden, wobei jedes endlose Band (1) zwei parallele Außenwände aufweist, die durch eine Vielzahl paralleler zu den Außenwänden senkrechter Stege verbunden sind, welches Verfahren folgende Schritte umfaßt:

Einführen des endlosen, extrudierten, mit Hohlkammern versehenen Bandes (1) in eine Schneidstation;

Zerschneiden des endlosen Bandes (1) in Längsrichtung nahe und entlang seiner Ränder und entlang von zumindest einer längslinie des Bandes (1), beispielsweeise seiner Achse, um zumindest zwei endlose Bahnen (101, 102) zu erhalten;

Ablenken der endlosen Bahnen (101, 102) um parallele Querachsen, senkrecht zur Bewegungsrichtung der Bahnen entlang von, bezüglich der ursprünglichen Zufuhrebenenrichtung der Bahnen (101, 102) verschieden geneigten Wegen;

Warmformen jedes Längsrandes der endlosen Bahnen (101, 102), welche zuerst einer Wärmewirkung zum Erweichen der geschnittenen Seitenränder und nachher einem Formvorgang zum Miteinander-Verschließen dieser Seitenränder unterworfen werden;

Kühlen dieser Längsseitenränder der endlosen Bahnen (101, 102), um ihre Verformung durch Wärmeeinwirkung zu vermeiden;

neuerliches Ablenken der endlosen, warmgeformten Bahnen (101, 102), um sie in eine Anordnung in einer Ebene zu bringen;

Zerschneiden der endlosen, warmgeformten, nun in einer Ebene befindlichen Bahnen (101, 102) in Querrichtung in vorbestimmte Längen, um Platten mit gewünschten Größen zu erhalten.

2. Das Verfahren gemäß Anspruch 1, dadurch gekennzeichnet, daß während des Warmformungsschrittes der Ränder der Bahnen (101, 102) der Spalt zwischen den Längsseitenrändern jeder endlosen Bahnen (101, 102) und dem Warmformmittel im wesentlichen konstant gehalten wird.

3. Das Verfahren gemäß Anspruch 1 und 2, dadurch gekennzeichnet, daß der Spalt zwischen den Längsseitenrändern der endlosen Bahnen und dem Warmformmittel im wesentlichen konstant gehalten wird durch die Querbewegung des Warmformmittels gegenüber jeder endlosen Bahn (101, 102), wobei diese Bewegung durch einen Motor gesteuert wird, der auf ein, von einem Spaltfühlmittel erzeugtes Spalt-Änderungssignal anspricht.

4. Vorrichtung zum Warmformen von Kunststoffhalbfertigprodukten, die zur Erzeugung von zumindest zwei Vielzahlen von mit Hohlkammern versehenen Platten, insbesondere aus Polypropylen, in Form eines endlosen, mit Hohlkammern versehenen Bandes extrudiert werden, wobei das Band (1) zwei parallele Außenwände und innere parallele Stege besitzt, welche eine Vielzahl an Querkanälen definieren, welche Vorrichtung umfaßt:

Mittel (34, 34') zum Schneiden des von der Extrusionsstation kommenden, halbfertigen, mit Hohlkammern versehenen, sich kontinuierlich bewegenden Bandes (1) in längsgerichtete endlose Bahnen (101, 102, ...) entlang den Längsseitenrändern um den Rand des Bandes (1) zuzuschneiden, und entlang von zumindest einer Längslinie, beispielsweise der Längsachse des ursprünglichen Bandes (1);

Mittel (32, 32', 33, 33') zum Ablenken der in Längsrichtung geschnittenen Bahnen (101, 102) um parallele Querachsen, senkrecht zur Bewegungsrichtung der Bahnen (101, 102, ...) entlang von, bezüglich der ursprünglichen Zufuhrebenenrichtung des Bandes (1) verschieden geneigten Wegen;

Warmformmittel (6, 12), um die Längsseitenränder der Außenwände jeder endlosen Bahn (101, 102, ...) einer Wärmewirkung zum Erweichen dieser Ränder und nachher einem progressiven Formvorgang zum dichten Miteinander-Verschließen dieser Ränder zu unterwerfen;

Mittel (35, 41) zum Kühlen jedes dieser vorgeformten Längsseitenränder jeder endlosen Bahn (101, 102); und

Mittel (32, 32', 33, 33') zum neuerlichen Ablenken der endlosen Bahnen (101, 102), damit sie wieder eine gegenseitige Anordnung in einer Ebene annehmen.

5. Die Vorrichtung gemäß Anspruch 4, dadurch gekennzeichnet, daß das Ablenkmittel (32, 32', 33, 33') aus Ablenk- und Führungswalzen mit im Abstand angeordneten parallelen Achsen, senkrecht zur Zufuhrrichtung der Bahnen (101, 102, ...) besteht, und über welche die vom endlosen Band (1) in Längsrichtung geschnittenen endlosen Bahnen (101, 102) geführt und in Richtungen abgelenkt werden, die zur ursprünglichen Zufuhrrichtung des Bandes (1) unterschiedlich geneigt sind.

6. Die Vorrichtung gemäß Anspruch 4, dadurch gekennzeichnet, daß jedes Warmformmittel (6, 12) sowohl eine Heizanordnung (6), welche mit einem elektrischen Widerstand (8) versehen ist und zum Längsseitenrand der betreffenden endlosen Bahn (101, 102) getrichtet ist und Heizflansche (10, 10') besitzt, die Wärme transportieren und diesen Rand erweichen, als auch eine Formgebungsanordnung (12) umfaßt, welche aus einem konkaven Werkzeug gebilet ist, um diese erweichten Ränder der Außenwände der Bahnen (101, 102) durch Kontakt zu formen und dicht miteinander zu verschließen.

7. Die Vorrichtung gemäß Anspruch 4, dadurch gekennzeichnet, daß jedes Kühlmittel eine Luft- oder andere Fluidquelle und einen Kanal (35, 41) aufweist, der dieses Fluid an den warmgeformten Längsrändern jeder endlosen Bahn (101, 102) befördert.

8. Die Vorrichtung gemäß Anspruch 4, dadurch gekennzeichnet, daß sie ferner ein Mittel zum im wesentlichen konstanten Aufrechterhalten des Spaltes zwischen dem Warmformmittel (6, 12) und dem Längsseitenrand der endlosen Bahnen (101, 102) aufweist, welches Mittel Spaltfühlmittel zum Zuführen eines Signales als Antwort auf Änderungen dieses Spaltes und einen auf dieses Signal ansprechenden Schrittmotor (6) aufweist, um die Warmformanordnung (6, 12) bezüglich der Zuführrichtung jeder endlosen Bahn (101, 102) in Querrichtung hin oder her zu fahren.

**Revendications**

1. Procédé pour déformer à chaud des produits plastiques semi-finis extrudés en forme d'une bande continue et alvéolée pour produire au moins deux pluralités de panneaux alvéolés, en particulier en polypropylène, dans lequel chaque bande continue (1) comprend deux parois extérieures parallèles reliées ensemble par plusieurs âmes parallèles qui sont, perpendiculaires auxdites parois extérieures, ledit procédé comprenant les opérations qui consistent à:

introduire la bande extrudée (1) continue et alvéolée dans un poste de découpe;

découper longitudinalement la bande continue (1) au voisinage et le long de ses bords et le long d'au moins une ligne longitudinale de la bande (1), par exemple son axe, de façon à obtenir au moins deux feuilles continues (101, 102);

défléchir les feuilles continues (101, 102) autour d'axes transversaux parallèles, perpendiculaires à la direction de déplacement des feuilles, le long de trajets présentant des pentes différentes par rapport à la direction originale du plan d'alimentation des feuilles (101, 102);

déformer à chaud chacun des bords longitudinaux desdites feuilles continues (101, 102) qui sont soumis en premier à une action de chauffage pour amollir les bords latéraux découpés et après cela à une action de formage pour joindre ensemble lesdits bords latéraux;

refroider lesdits bords latéraux longitudinaux des feuilles continues (101, 102) pour éviter leur déformation due à l'action de chauffage;

défléchir encore les feuilles continues déformées à chaud (101, 102) pour les amener dans une disposition coplanaire;

découper transversalement les feuilles continues formées à chaud (101, 102), maintenant coplanaires, selon des longueurs prédéterminées pour obtenir des panneaux de tailles désirées.

2. Procédé selon la revendication 1 caractérisé en ce que, pendant l'opération de déformation à chaud des bords des feuilles (101, 102), l'écart ménagé entre les bords latéraux longitudinaux de chacune des feuilles continues (101, 102) et le moyen de déformation à chaud est maintenu pour l'essentiel constant.

3. Procédé selon les revendications 1 et 2, caractérisé en ce que ledit écart ménagé entre les bords latéraux longitudinaux des feuilles continues et le moyen de déformation à chaud est maintenu pour l'essentiel constant par des déplacements transversaux du moyen de déformation à chaud par rapport à chaque feuille continue (101, 102), ledit déplacement étant commandé par un moteur en réponse à un signal de variation d'écart produit par un moyen capteur d'écart.

4. Appareil pour déformer à chaud des produits plastiques semi-finis extrudés en forme d'une bande continue et alvéolée (1) pour fournir au moins deux pluralités de panneaux alvéolés, en particulier en polypropylène, ladite bande (1) présentant deux parois extérieures parallèles et des âmes intérieures parallèles qui définissent plusieurs canaux transversaux, l'appareil comprenant:

des moyens (34, 34') pour découper la bande semi-finie mobile (1) continue et alvéolée, provenant du poste d'extrusion, en feuilles continues longitudinalement (101, 102, ...) le long des bords latéraux longitudinaux pour arranger la lisière de la bande (1), et le long d'au moins une ligne longitudinale telle que par exemple l'axe longitudinal de la bande originale (1);

des moyens (32, 32', 33, 33') pour défléchir les feuilles (101, 102), découpées longitudinalement, autour d'axes transversaux parallèles qui sont perpendiculaires à la direction de déplacement des feuilles (101, 102), le long de trajets présentant des pentes différentes par rapport à la direction originale d'alimentation de la bande (1);

des moyens de déformation à chaud (6, 12) pour soumettre les bords latéraux longitudinaux des parois extérieures de chaque feuille continue (101, 102) à une action de chauffage, pour amollir lesdits bords, puis à une action de formage progressive pour joindre ensemble lesdits bords de façon étanche;

des moyens (35, 41) pour refroidir chacun des bords latéraux longitudinaux formés à chaud de chaque feuille (101, 102); et

des moyens (32, 32', 33, 33') pour défléchir à nouveau les feuilles continues (101, 102) de façon qu'elles prennent encore une disposition mutuelle coplanaire.

5. Appareil selon la revendication 4, caractérisé en ce que ledit moyen de déflection (32, 32', 33, 33') consiste en des galets de déflection et de guidage, dont les axes parallèles écartés entre eux sont perpendiculaires à la direction d'alimentation des feuilles (101, 102, ...), autour desquels les feuilles continues (101, 102), découpées longitudinalement à partir de la bande continue (1), sont guidées et déviées dans des directions qui présentent des pentes différentes par rapport à la direction originale d'alimentation de la bande (1).

6. Appareil selon la revendication 4, caractérisé en ce que chaque moyen de déformation à chaud (6, 12) comprend un ensemble de chauffage (6) pourvu d'une résistance électrique (8), dirigé vers le bord latéral longitudinal de la feuille continue respective (101, 102) et présentant des rebords chauffants (10, 10'), qui transportent la chaleur et ramollissent le dit bord, ainsi qu'un ensemble de formage (12) constitué d'une matrice concave pour former par contact lesdits bords ramollis des parois extérieures des feuilles (101, 102) et les joindre ensemble de façon étanche;

7. Appareil selon la revendication 4, caractérisé en ce que chaque moyen de refroidissement comprend une source d'air ou d'un autre fluide et un conduit (35, 41) acheminant ledit fluide sur les bords longitudinaux formé à chaud de chaque feuille continue (101, 102).

8. Appareil selon la revendication 4, caractérisé en ce qu'il comprend en plus des moyens pour maintenir essentiellement constant l'écart ménagé entre les moyens de déformation à chaud (6, 12) et le bord latéral longitudinal des feuilles continues (101, 102), lesdits moyens comprenant un moyen capteur d'écart apte à fournir un signal en réponse à des variations dudit écart; un moteur pas à pas (6) en réponse audit signal entraînant en avant ou en arrière l'ensemble de déformation à chaud (6, 12) dans une direction transversale par rapport à la distance d'alimentation de chaque feuille continue (101, 102).

# FIG.1A'

# FIG.1B

# FIG.2

FIG.3

FIG.4

2

*FIG.5*

34

34'

1

*FIG.6*

41

11

101

10

9

6

4

4'

1b

10'

8

11'

41

*FIG.7*

13

12

101

1b

13'

14

35

FIG.8

FIG.9

FIG.10

4

FIG.11

FIG.12

FIG.13